# EUROPEAN PATENT APPLICATION

(11) **EP 4 183 913 A1**
(43) Date of publication of application: **24.05.2023**
(21) Application number: 21845489.0
(22) Date of filing: 28.06.2021
(51) Int. Cl.: D06F 39/02

(54) **FLOW PATH CONVERTER, DISPENSING DEVICE, AND WASHING MACHINE**

(30) Priority: 24.07.2020 CN 202010722738
(71) Applicant: CHONGQING HAIER DRUM WASHING MACHINE CO., LTD., Chongqing 400000 (CN); HAIER SMART HOME CO., LTD., Laoshan District Qingdao Shandong 266101 (CN)
(72) Inventor: HUANG, Tao, Qingdao, Shandong 266101 (CN); CHENG, Baozhen, Qingdao, Shandong 266101 (CN); HUANG, Bencai, Qingdao, Shandong 266101 (CN)
(74) Representative: Ziebig Hengelhaupt Intellectual Property Attorneys Patentanwaltsanwaltskanzlei PartGmbB
(86) International application number: PCT/CN2021/102666
(87) International publication number: WO 2022/017128

(57) **Abstract**

A flow path converter, a dispenser and a washing machine are provided. The flow path converter comprises: a housing (1) provided with at least one liquid inlet (4) and at least one liquid outlet (5). A valve core (2) being rotatable is disposed in the housing (1) and is provided with at least one path (9), and the path (9) is connected with or disconnected from the at least one liquid inlet (4) and the at least one liquid outlet (5) when the valve core (2) rotates to a set position. By means of the above arrangement, the flow path converter can achieve the effect of controllably connecting and disconnecting different liquid inlets (4) with/from different liquid outlets (5), and/or switching a connection relationship thereof only by rotating the valve core (2). Meanwhile, after the flow path converter is mounted to the feeding device, different water paths of the automatic feeding device is switched to suck different categories of additives by only mounting the flow path converter on the feeding device. Thereby the significant technical progress in reducing the number of suction structures of the feeding device and simplifying the complexity of the water paths is achieved.

## Description

### TECHNICAL FIELD

The present invention belongs to a washing machine in the field of laundry processing devices, specifically relates to an automatic feeding device for a washing machine, in particular to a flow path converter for corresponding switching control of a plurality of water path and a plurality of liquid storage cavities of an automatic feeding device.

### BACKGROUND

With the improvement of people's living standard, an electrical appliance such as a washing machine and a dish-washing machine is generally provided with a feeding device for feeding different additives. A feeding water path is disposed on the feeding device, and is connected to a washing cylinder of the appliance. The feeding device is provided with a liquid storage cavity for storing the additives, and the liquid storage cavity is connected to the feeding water path. Under the action of a suction structure disposed on the feeding water path, the additives stored in the liquid storage cavity are sucked into the feeding water path. Then inflowing water flowing through the feeding water path is used to flush the additives to the washing cylinder again, thereby feeding the additives.

Since there are multiple categories of the additives at present, such as various cleaning solutions, softeners, fabric conditioners and fragrance additives, a feeding water path provided with a suction apparatus needs to be separately correspondingly disposed for additives in each category when the feeding device needs to correspondingly feed various additives in different categories, resulting in complex water paths and increased costs of the feeding device.

In addition, in the prior art, solenoid control valves are generally mounted on different water paths of the feeding device, and are used for electromagnetic control on the opening and closing of the respective water paths, so as to control the connection and disconnection of the water paths connected to different liquid storage cavities of the feeding device. The current frequently-used solenoid controlling valves generally make the water paths normally open or normally close when not energized. After being energized, the solenoid controlling valves make the water paths be switched to another work condition: normally close or normally open. The solenoid controlling valve in the prior art can only achieve the control of separate connection and disconnection of the water paths. Since the structure of the above solenoid controlling valve is relatively complex, the entire feeding device is clunky in structure and large in volume.

In addition, currently, some washing machines are further integrated with some other functions, such that the feeding device needs to make a plurality of feeding water paths correspond to a single category of additives, so as to achieve an effect of respectively feeding the same category of additives in various forms. In order to achieve the above effect, a plurality of sets of feeding water paths provided with the suction apparatuses are required for the same liquid storage cavity. As a result, the water paths of the feeding device are more complex, and there are too many electrical devices, especially the solenoid controlling valves, easily leading to high fault rate of the feeding device.

In view of this, the present invention is especially proposed.

### SUMMARY

The technical problem to be solved by the present invention is to overcome the deficiency of the prior art. The present invention provides a flow path converter, so as to achieve the purpose of controlling the connection, disconnection and switching of different water paths by means of rotation of a valve element.

In order to solve the above technical problem, the present invention uses the following basic conception of the technical solution.

The present invention provides a flow path converter. The flow path converter includes: a housing, provided with at least one liquid inlet and at least one liquid outlet. A valve core being rotatable is disposed in the housing and is provided with at least one path. When the valve core rotates to a set position, the path is connected with or disconnected from the at least one liquid inlet and the at least one liquid outlet.

Further, two opposite sides of the housing are respectively provided with a plurality of liquid inlets and a plurality of liquid outlets. The liquid inlets and the liquid outlets are coaxially disposed in a one-to-one correspondence manner. Each of the liquid inlets and each of the liquid outlets are eccentric with a rotary axis of the valve core. The path disposed on the valve core extends in a direction parallel to the rotary axis of the valve core, and two ends of the path are respectively disposed towards the sides provided with the liquid inlets and liquid outlets.

Further, the valve core is provided with at least one path. Two ends of each path, and the corresponding liquid inlet and liquid outlet are all in the same circle. When the valve core rotates around the shaft, the path makes the liquid inlet be correspondingly connected with or disconnected from the liquid outlet that are coaxially oppositely disposed.

Preferably, the valve core is provided with a plurality of paths. A distance between liquid intake ends of any two paths equals a distance between corresponding two liquid inlets. A distance between liquid output ends of any two paths equals a distance between corresponding two liquid outlets.

Further preferably, the valve core is provided with a plurality of paths. The paths are equidistantly and symmetrically arranged with respect to the rotary axis of the valve core.

Further, the liquid inlets are arranged in a plurality of circles on a first side of the housing, and each circle separately corresponds to the liquid intake end of the at least one path. The projection of the liquid intake end of the path in a direction of the rotary shaft of the valve core is on the corresponding circle. The liquid outlets are arranged in a plurality of circles on a second side of the housing, and each circle separately corresponds to the liquid output end of the at least one path. The projection of the liquid output end of the path in the direction of the rotary shaft of the valve core is on the corresponding circle.

Further, the first side of the housing is provided with a plurality of liquid inlets, and the liquid inlets are eccentric with the rotary axis of the valve core. The second side of the housing is provided with one liquid outlet. A cavity is formed inside the housing. The valve core is located in the cavity and close to a side provided with the liquid inlet. The liquid outlet is connected with the cavity. The valve core is provided with at least one path. A liquid output end of the path is connected with the cavity, and a liquid intake end is disposed towards the first side of the housing. When the valve core rotates around the shaft, the path the make the liquid inlet disposed correspondingly to the path be correspondingly connected with or disconnected from the cavity.

Further, the first side of the housing is provided with one liquid inlet. A second side of the housing is provided with a plurality of liquid outlets, and the liquid outlets are eccentric with the axis of the housing. A cavity is formed inside the housing. The valve core is located in the cavity and close to a side provide with the liquid outlets. The liquid inlet is connected with the cavity. The valve core is provided with at least one path. A liquid intake end of the path is connected with the cavity, and a liquid output end is disposed towards the second side of the housing. When the valve core rotates around the shaft, the path make the liquid outlets disposed correspondingly to the path be correspondingly connected with or disconnected from the cavity.

Further, the liquid inlet and the liquid outlet are respectively disposed on two opposite sides of the housing with cylindrical shape. The hollow cavity is disposed in the housing with cylindrical shape. The valve core is rotatably mounted in the hollow cavity. The rotary shaft of the valve core is coaxial with the housing with cylindrical shape. The two ends of the path on the valve core are respectively disposed towards two sides, provided with the liquid inlet and the liquid outlet side, of the housing. Axes of the liquid inlet and the liquid outlet are arranged parallel to the rotary shaft of the valve core.

Further, the hollow cavity is disposed in the housing, and both the liquid inlet and the liquid outlet that are formed in the housing are connected with the cavity. The valve core is disc-shaped and is mounted in the cavity. The periphery of the valve core with disc-shaped is in contact with an inner circumferential wall of the cavity in a sealed manner, such that liquid flowing from the liquid inlet can only flow to the liquid outlet by means of the path disposed on the valve core. A driving motor is disposed on the housing; and a motor shaft of the driving motor is connected to the center of the valve core with disc-shaped to drive the valve core to rotate around a central shaft. Preferably, the motor shaft is coaxial with the housing with cylindrical shape.

Further, a connector mounted on the valve core and protruding outwards is disposed on the at least one end of the path, and is made of an elastically deformable material. An end portion of the connector is in contact with an inner wall of the housing with cylindrical shape in a sealed manner.

The present invention further provides a feeding device of a washing machine, so as to feed various additives respectively through different feeding water paths. In order to achieve the above purpose, the present invention uses the following specific solutions.

A feeding device includes:
a liquid storage box, provided with at least one liquid storage cavity,
a dispenser, provided with at least one feeding water path, and
the above any flow path converter.

Each of the liquid storage cavities separately is connected with at least one liquid inlet of the flow path converter. The liquid outlet of the flow path converter is connected with the at least one feeding water path.

The present invention further provides a washing machine. The above feeding device is mounted on the washing machine. A water intake structure of the washing machine is connected to a washing cylinder of the washing machine via the feeding water path of the feeding device.

After the technical solutions are used, compared with the prior art, the present invention has the following beneficial effects.

According to the present invention, by means of the above arrangement, the flow path converter can achieve the effect of controllably connecting and disconnecting different liquid inlets with/from different liquid outlets, and/or switching a connection relationship between different liquid inlets and different liquid outlets only by rotating the valve core. Meanwhile, after the flow path converter is mounted to the feeding device, different water paths of the automatic feeding device is switched to suck different categories of additives by only mounting the flow path converter on the feeding device. Thereby the significant technical progress in reducing the number of suction structures of the feeding device and simplifying the complexity of the water paths is achieved.

In addition, the present invention is simple in structure, significant in effect and suitable for promotion and usage.

Specific implementations of the present invention are further described in detail below with reference to the drawings.

### BRIEF DESCRIPTION OF THE DRAWINGS

The drawings, as a part of the present invention, are used to provide further understanding of the present invention. The exemplary embodiments of the present invention and the description thereof are used to explain the present invention, but do not improperly limit to the protected scope of the present invention. It is apparent that the drawings in the following descriptions are merely some embodiments. Those of ordinary skill in the art can obtain other drawings according to these drawings without any creative work. In the drawings:
Fig. 1 is a schematic structural diagram of a flow path converter according to an embodiment of the present invention;
Fig. 2 is a side view of a flow path converter according to an embodiment of the present invention;
Fig. 3 is a schematic structural diagram of a cross section A-A of Fig. 2 according to an embodiment of the present invention;
Fig. 4 is a schematic structural diagram of a cross section B-B of Fig. 2 according to an embodiment of the present invention;
Fig. 5 is a top view of a flow path converter according to an embodiment of the present invention;
Fig. 6 is a schematic structural diagram of a cross section C-C of Fig. 5 according to an embodiment of the present invention;
Fig. 7 is a schematic structural diagram of a cross section D-D of Fig. 5 according to an embodiment of the present invention;
Fig. 8 is an exploded view of a flow path converter according to an embodiment of the present invention;
Fig. 9 to Fig. 11 are schematic structural diagrams of a valve core in different angles of view according to an embodiment of the present invention;
Fig. 12 is an exploded view of a flow path converter according to Embodiment II of the present invention;
Fig. 13 is an exploded view of a flow path converter according to Embodiment III of the present invention;
Fig. 14 is a side view of a flow path converter according to Embodiment IV of the present invention;
Fig. 15 is a schematic structural diagram of a cross section A-A of Fig. 14 when a valve core is at a first position according to Embodiment IV of the present invention;
Fig. 16 is a schematic structural diagram of a cross section A-A of Fig. 14 when a valve core is at a second position according to Embodiment IV of the present invention;
Fig. 17 is a schematic structural diagram of a cross section B-B of Fig. 14 when a valve core is at a first position according to Embodiment IV of the present invention;
Fig. 18 is a schematic structural diagram of a cross section B-B of Fig. 14 when a valve core is at a second position according to Embodiment IV of the present invention;
Fig. 19 is a schematic structural diagram of a cross sectional of a flow path converter according to Embodiment V of the present invention;
Fig. 20 is a top view of a flow path converter according to Embodiment VI of the present invention;
Fig. 21 is a schematic diagram of a cross section E-E of Fig. 20 according to Embodiment VI of the present invention;
Fig. 22 is an exploded view of a flow path converter according to Embodiment VI of the present invention; and
Fig. 23 is a principle block diagram of an implementation of a feeding device according to the present invention.

In the drawings: 1. housing; 2. valve core; 3. driving motor; 4. liquid inlet; 5. liquid outlet; 6. cavity; 7. first housing; 8. second housing; 9. path; 10. connector; 11. bolt; 41. first liquid inlet; 42. second liquid inlet; 51. first liquid outlet; 52. second liquid outlet; 91. first path; 92. second path; 100. flow path converter; 200. liquid storage cavity; 300. feeding water path; 400. suction apparatus.

It is to be noted that, these drawings and text descriptions are not intended to limit the scope of the concept of the present invention in any way, but to explain the concept of the present invention for those skilled in the art with reference to the specific embodiments.

### DETAILED DESCRIPTION

In order to make the purposes, technical solutions and advantages of the embodiments of the present invention clearer, the technical solutions in the embodiments of the present invention are clearly and completely described below with reference to the drawings in the embodiments of the present invention. The following embodiments are used to illustrate the present invention, but not to limit the scope of the present invention.

In the description of the present invention, it should be noted that, direction or position relationships indicated by terms such as "upper", "lower", "front", "rear", "left", "right", "vertical", "inner", and "outer" and the like are direction or position relationships based on the drawings, and are merely intended to facilitate the description of the present invention and simplify the description, rather than indicating or implying that a referred apparatus or element must have a particular direction or be constructed and operated in a particular direction. Therefore, these terms should not be interpreted as limiting the present invention.

In the description of the present invention, it is to be noted that, unless otherwise clearly specified and limited, the terms "mount", "link" and "connect" should be interpreted broadly. For example, the term "connect" may be fixed connection, detachable connection or integral construction, may be mechanical connection, or electrical connection, and may be direct connection, or indirect connection by means of a medium. For those of ordinary skill in the art, specific meanings of the above terms in the present invention may be understood according to specific conditions.

An embodiment of the present invention introduces a flow path converter. The flow path converter mentioned in the present invention is mainly applied to an automatic feeding device of a washing machine, and is configured to perform controllable switching on different flow channels and control flow directions, connection and disconnection of the flow paths in the automatic feeding device, so that it is achieved to feed different categories of additives by different water paths, thereby realizing the significant technical progress in enriching the additive feeding forms of the washing machine and performing diversified feeding of the additives.

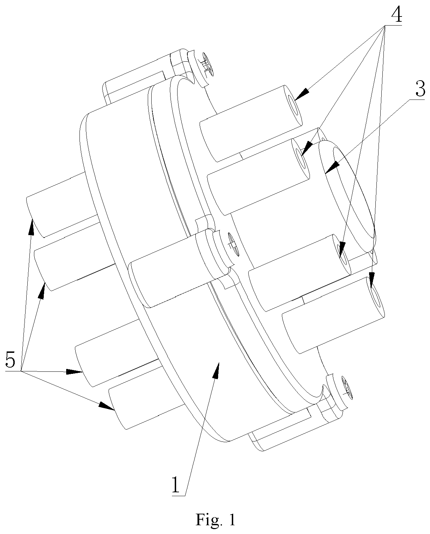

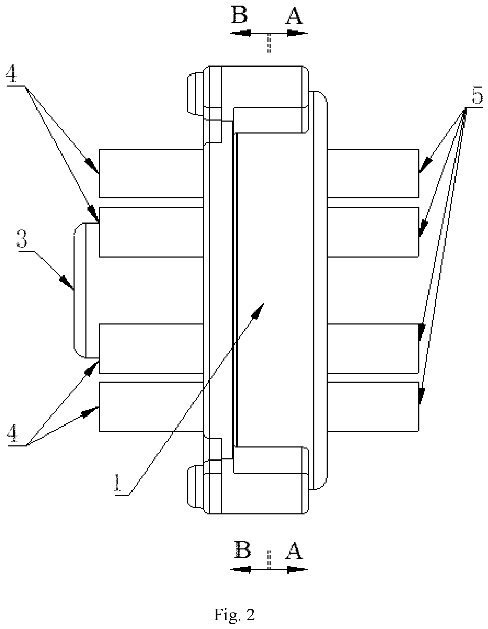

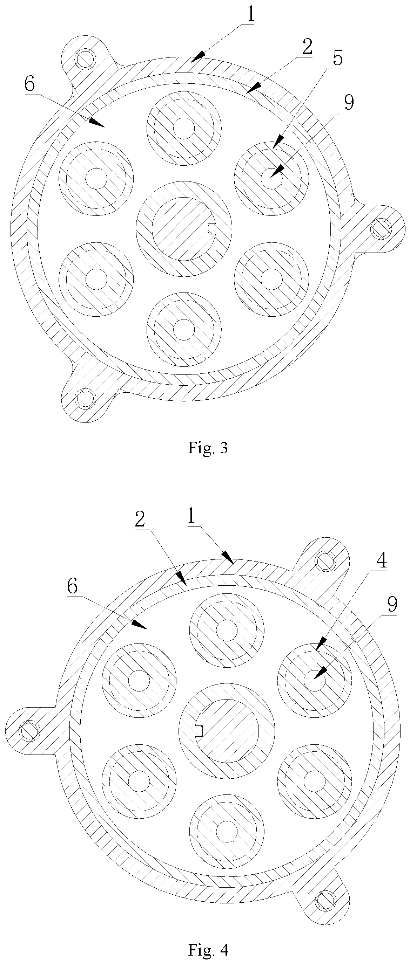

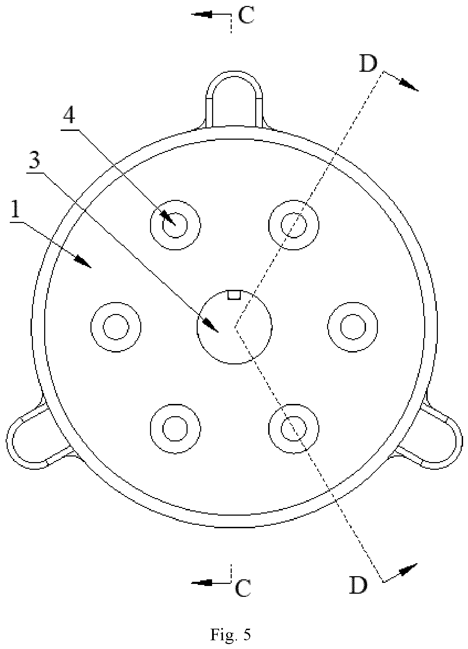

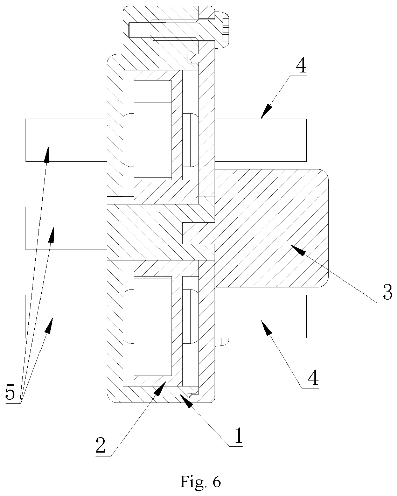

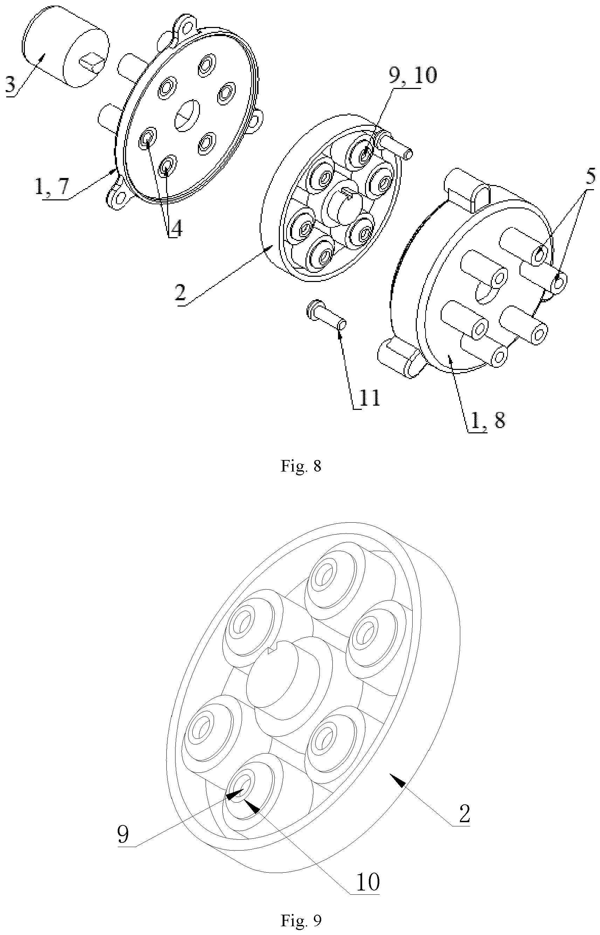

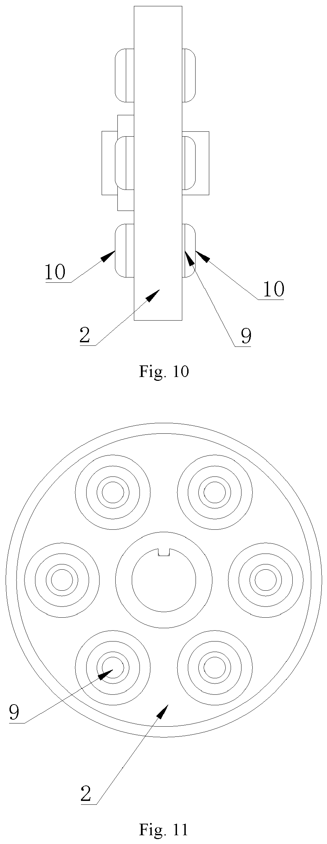

As shown in Fig. 1 to Fig. 22, a flow path converter is described in an embodiment of the present invention. The flow path converter includes a housing 1. The housing 1 is provided with at least one liquid inlet 4 and at least one liquid outlet 5. A valve core 2 being rotatable is disposed in the housing 1, and may be connected to a driving motor 3, such that the valve core 2 may achieve an automatic, controllable and corresponding rotation effect under the control of the driving motor 3. The valve core 2 is provided with at least one path 9. During the rotation of the valve core 2, the path 9 is configured to correspondingly make the at least one liquid inlet 4 be connected with or disconnected from the at least one liquid outlet 5. Therefore, the flow path converter can achieve the effect of controllably opening and closing different liquid inlets and different liquid outlets, and/or switching a connection relationship between different liquid inlets 4 and different liquid outlets 5 only by rotating the valve core 2. In addition, after the flow path converter is mounted to the feeding device, the effect of switching different water paths of the automatic feeding device to suck different categories of additives can be achieved by only mounting one flow path converter on the feeding device, thereby the significant technical progress in reducing the number of suction structures of the feeding device and simplifying the complexity of the water paths can be achieved.

### Embodiment I

As shown in Fig. 1 to Fig. 11, an embodiment describes a flow path converter. The flow path converter includes a housing 1. The housing 1 is provided with a plurality of liquid inlets 4 and a plurality of liquid outlets 5, which are disposed in a one-to-one correspondence manner. A rotary valve core 2 is disposed in the housing 1, and is provided with a plurality of paths 9. During the rotation of the valve core 2, the paths 9 are configured to correspondingly make the plurality of liquid inlets 4 be connected with or disconnected from the plurality of liquid outlets 5 which are opposite to the liquid inlets in a one-to-one correspondence manner.

In the embodiment, the liquid inlets 4 and the liquid outlets 5 are respectively disposed on two opposite sides of the cylindrical housing 1. A hollow cavity 6 is installed in the cylindrical housing 1. The valve core 2 is rotatably mounted in the hollow cavity 6. A rotary shaft of the valve core 2 is coaxial with the cylindrical housing 1. Two ends of the path 9 on the valve core 2 are respectively a liquid intake end disposed towards the liquid inlet 4 of the housing 1 and a liquid output end disposed towards the liquid outlet 5.

In the embodiment, preferably, an axis of the liquid inlet 4 and an axis of the liquid outlet 5 are disposed parallel to the rotary shaft of the valve core 2.

In the embodiment, a first side of the cylindrical housing 1 is provided with the plurality of liquid inlets 4, and each of the liquid inlets 4 is eccentric with an axis of the housing 1. A second side of the cylindrical housing 1 is provided with the plurality of liquid outlets 5, and each of the liquid outlets 5 is eccentric with the axis of the housing 1. The liquid inlets 4 and the liquid outlets 5 are coaxially disposed in a one-to-one correspondence manner. The path 9 disposed on the valve core 2 extends in a direction parallel to the axis of the cylindrical housing 1. The two ends of the path 9 are respectively disposed corresponding to the corresponding liquid inlet 4 and liquid outlet 5, such that the paths 9 separately coaxially are connected with the liquid inlets 4 and the liquid outlets 5 in a one-to-one correspondence manner after the valve core 2 rotates to a set position.

In the embodiment, the valve core 2 is provided with a plurality of paths 9, the number of the paths 9 is the same as the number of the liquid inlets 4 and the number of the liquid outlets 5. Projections of two ends of each of the paths 9 and projections of each of the liquid inlets 4 and each of the liquid outlets 5 in a direction of the rotary shaft of the valve core 2 are all in the same circle, and the center of the circle is located on the rotary axis of the valve core 2. When the valve core 2 rotates around the shaft, the paths 9 is correspondingly configured to make the liquid inlets 4 be connected with or disconnected from the liquid outlets 5 which are coaxially oppositely disposed with the liquid inlets, so as to achieve an effect of simultaneously connecting or disconnecting different liquid inlets 4 and different liquid outlets 5 in a one-to-one correspondence manner.

In order to improve the smoothness of the water paths, preferably, the two ends of each of the paths 9, and each of the liquid inlets 4 and each of the liquid outlets 5 are all provided as circular holes. Projections of the axes of the circular holes in the direction of the rotary shaft of the valve core 2 are all in the same circle.

In the embodiment, the valve core 2 is provided with the plurality of paths 9. A distance between liquid intake ends of any two paths 9 is equal to a distance between the corresponding two liquid inlets 4. A distance between liquid output ends of any two paths 9 is equal to a distance between the corresponding two liquid outlets 5. Therefore, each path 9 separately corresponds to one liquid inlet 4 and one liquid outlet 5, so as to achieve the purpose of controlling the connection and disconnection of the corresponding liquid inlet 4 and liquid outlet 5.

In the embodiment, the valve core 2 is provided with the plurality of paths 9, and the number of the paths 9 may be any positive integer greater than or equal to 2. In order to improve the stable operation of the flow path converter, preferably, the following arrangement may be performed: The paths 9 are equidistantly and symmetrically arranged relative to the rotary axis of the valve core 2. Likewise, in order to adapt to the valve core 2, the first side of the housing 1 is provided with a corresponding number of liquid inlets 4 that are equidistantly and symmetrically arranged relative to the rotary axis of the valve core 2, and the second side of the housing 1 is provided with a corresponding number of liquid outlets 5 that are equidistantly and symmetrically arranged relative to the rotary axis of the valve core 2.

### Embodiment II

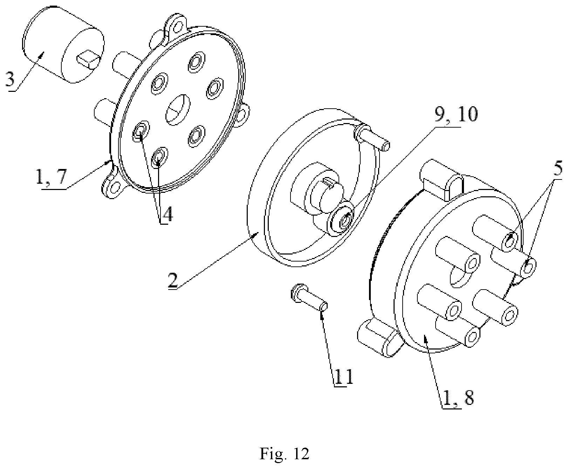

The difference between this embodiment and Embodiment I lies in that: as shown in Fig. 12, the number of the paths 9 disposed on the valve core 2 is less than that of the liquid inlets 4 formed in the housing 1, such that at least one path 9 on the valve core 2 controls the opening and closing of the plurality of liquid inlets 4.

And/or, as shown in Fig. 12, the number of the paths 9 disposed on the valve core 2 is less than the number of the liquid outlets 5 formed in the housing 1, such that at least one path 9 on the valve core 2 controls the opening and closing of the plurality of liquid outlets 5.

As shown in Fig. 12, the embodiment introduces a flow path converter. The valve core 2 is provided with a path 9. The first side and the second side of the housing 1 are respectively provided with a plurality of liquid inlets 4 and liquid outlets 5 arranged in the same circle. Projections of a liquid intake end and a liquid output end of the path 9 and projections of the liquid inlets 4 and the liquid outlets 5 along the rotary axis of the valve core 2 are located on the same circle, and the center of the circle is located on the rotary axis of the valve core 2. During the rotation of the valve core 2, two ends of the path 9 are respectively connected to or disconnected from either the liquid inlet 4 or the liquid outlet 5, so as to achieve the effect of alternatively controlling the liquid inlet 4 to be connected with or disconnected from the liquid outlet 5.

Definitely, in the embodiment, in order to improve the function of the flow path converter, the valve core 2 may also be provided with two or more paths 9, so as to achieve the purpose of separately or simultaneously controlling the plurality of liquid inlets 4 to be connected with or disconnected with the plurality of liquid outlets 5.

### Embodiment III

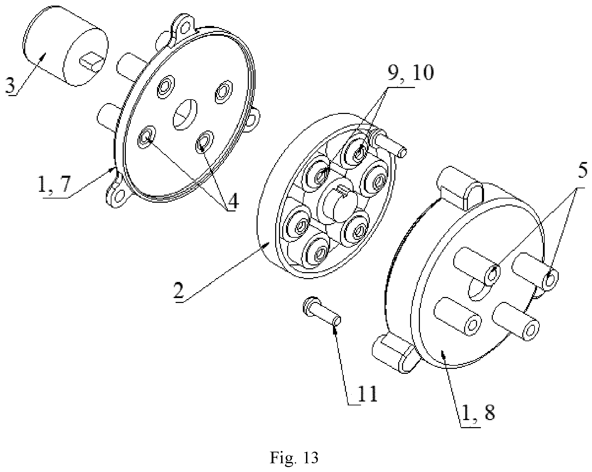

The difference between the embodiment and Embodiment I lies in that: as shown in Fig. 13, the number of the paths 9 disposed on the valve core 2 is greater than that of the liquid inlets 4 formed in the housing 1, such that at least one liquid inlet 4 may be connected with a plurality of paths 9 on the valve core 2.

And/or, as shown in Fig. 13, the number of the paths 9 disposed on the valve core 2 is greater than that of the liquid outlets 5 formed in the housing 1, such that at least one liquid outlet 5 may be connected with the plurality of paths 9 on the valve core 2.

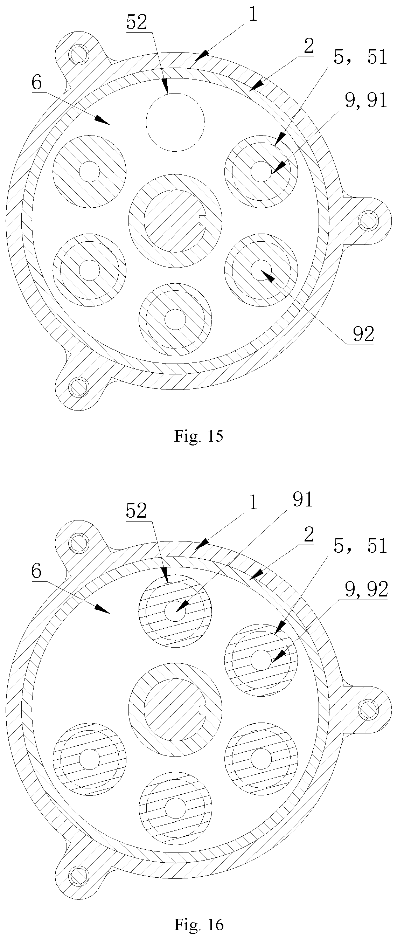

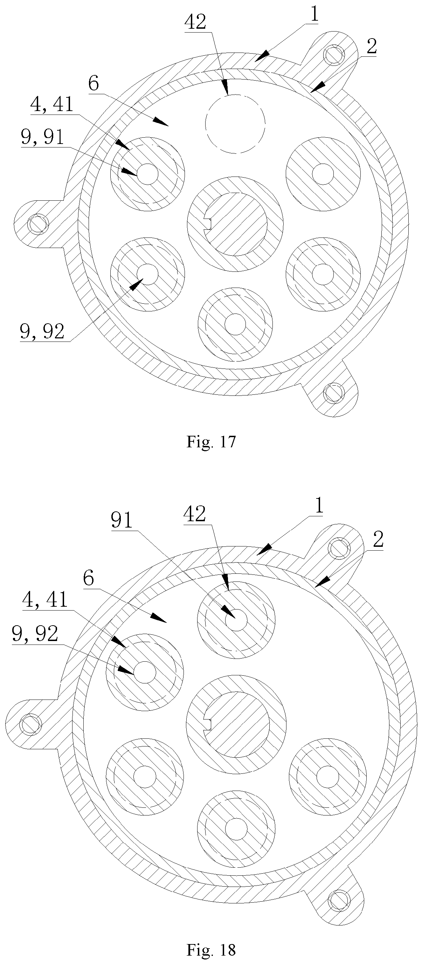

As shown in Fig. 13, a flow path converter is described in the embodiment. The valve core 2 is provided with a plurality of paths 9. The first side and second side of the housing 1 are respectively provided with a plurality of liquid inlets 4 and a plurality of liquid outlets 5, which are arranged in the same circle. During the rotation of the valve core 2, when the valve core 2 is at a first position (as shown in Fig. 15 and Fig. 17), two ends of a first path 91 respectively are connected with a first liquid inlet 41 and a first liquid outlet 51. In addition, when the valve core 2 is at a second position (as shown in Fig. 16 and Fig. 18), two ends of a second path 92 respectively are connected with the first liquid inlet 41 and the first liquid outlet 51, so as to control the connection or disconnection of the liquid inlet 4 and liquid outlet 5 in the same group by means of different paths 9 when the valve core 2 is at different positions.

### Embodiment IV

The embodiment describes a flow path converter on the basis of Embodiments I to III, which further has the following technical features.

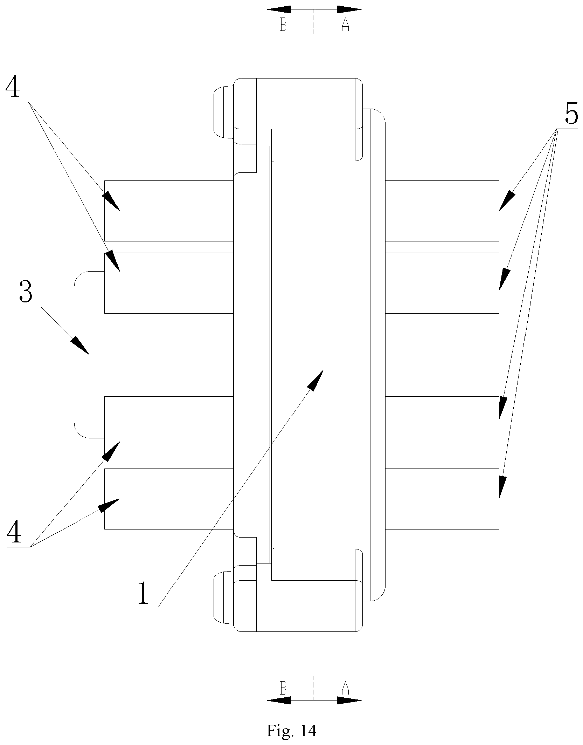

As shown in Fig. 14 to Fig. 18, the first side of the housing 1 is provided with a plurality of liquid inlets 4, and the liquid inlets 4 are asymmetrically arranged relative to the rotary axis of the valve core 2, such that at least one liquid inlet 4 may be connected with the corresponding path 9 when the valve core 2 rotates to different positions.

And/or, as shown in Fig. 14 to Fig. 18, the second side of the housing 1 is provided with a plurality of liquid outlets 5, and the liquid outlets 5 are asymmetrically arranged relative to the rotary axis of the valve core 2, such that at least one liquid outlet 5 may be connected with the corresponding path when the valve core 2 rotates to different positions.

As shown in Fig. 14 to Fig. 18, the embodiment describes the flow path converter. The valve core 2 is provided with a plurality of paths. The first side and second side of the housing 1 are respectively provided with the liquid inlets 4 and the liquid outlets 5 arranged in the same circle. During the rotation of the valve core 2, when the valve core 2 is at the first position (as shown in Fig. 15 and Fig. 17), two ends of a first path 91 respectively are connected to a first liquid inlet 41 and a first liquid outlet 51. In addition, when the valve core 2 is at the second position (as shown in Fig. 16 and Fig. 18), two ends of the first path 91 respectively are connected with a second liquid inlet 42 and a second liquid outlet 52. Thereby it is achieved to control the connection or disconnection of different liquid inlets 4 and liquid outlets 5 respectively by means of the same path 9 when the valve core 2 is at different positions.

### Embodiment V

The embodiment describes a flow path converter on the basis of Embodiments I to IV, which further has the following technical features.

In the embodiment, at least one liquid inlet 4 is formed in each of the concentric circles on the first side of the housing 1 of the flow path converter, and the center of each of the concentric circles is on the rotary axis of the valve core 2. Each circle corresponds to at least one path 9, and the projection of the liquid intake end of the path 9 along the rotary axis of the valve core 2 is on the corresponding circle, such that when the valve core 2 rotates, the paths 9 corresponding to different circles respectively are connected with or are disconnected from the liquid inlets 4 in the corresponding circles. Preferably, the liquid intake ends of the paths are circular holes, and the projections of the centers of the circular holes along the rotary axis of the valve core 2 are on the corresponding circles.

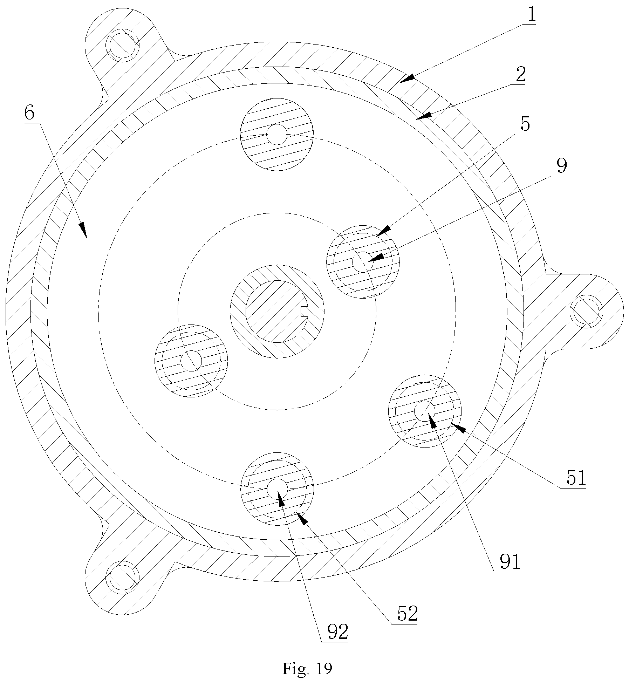

And/or, as shown in Fig. 19, at least one liquid outlet 5 is formed in each of the concentric circles on the second side of the housing 1, and the center of each of the concentric circles is on the rotary axis of the valve core 2. Each of the concentric circles corresponds to at least one path 9, and the projection of the liquid output end of the path 9 along the rotary axis of the valve core 2 is on the corresponding circle, such that when the valve core 2 rotates, the paths 9 corresponding to different circles respectively are connected with or are disconnected from the liquid outlets 5 in the corresponding circles. Preferably, the liquid output ends of the paths are circular holes, and the projections of the centers of the circular holes along the rotary axis of the valve core 2 are on the corresponding circles.

### Embodiment VI

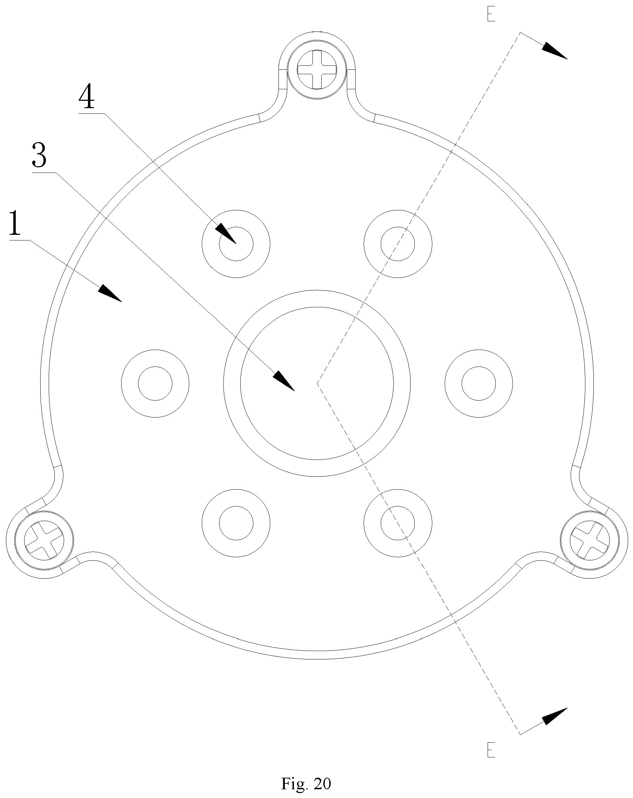

As shown in Fig. 20 to Fig. 22, the embodiment describes a flow path converter. The flow path converter includes a cylindrical housing 1. The first side of the cylindrical housing 1 is provided with liquid inlets 4, and each of the liquid inlets 4 is eccentric with the axis of the housing 1. The second side of the cylindrical housing 1 is provided with one liquid outlet 5. A cavity 6 is formed inside the housing 1, and the rotary valve core 2 is disposed in the cavity 6. The valve core 2 is located on a side in the cavity 6 close to the liquid inlet 4. The liquid outlet 5 is connected with the cavity 6. The valve core 2 is provided with at least one path 9. One end of the path 9 is connected with the cavity 6, and the other end of the path 9 is disposed towards the first side of the housing 1. When the valve core 2 rotates around the shaft, the path 9 correspondingly make the liquid inlets 4 be connected with or disconnected from the cavity 6 which are oppositely disposed, so as to make the single liquid outlet 5 be connected to one or more liquid inlets 4.

### Embodiment VII

The embodiment describes a flow path converter. The flow path converter includes a cylindrical housing 1. The first side of the cylindrical housing 1 is provided with one liquid inlet 4. The second side of the cylindrical housing 1 is provided with liquid outlets 5, and each of the liquid outlets 5 is eccentric with the axis of the housing 1. A cavity 6 is formed inside the housing 1, and a valve core 2 is located on a side in the cavity 6 close to the liquid outlet 5. The liquid inlet 4 is connected to the cavity 6. The valve core 2 is provided with at least one path 9. One end of the path 9 is connected with the cavity 6, and the other end of the path 9 is disposed towards the second side of the housing 1. When the valve core 2 rotates around the shaft, the path 9 correspondingly make the liquid outlets 5 be connected with or disconnected from the cavity 6 which are oppositely disposed, so as to make the single liquid inlet 4 be connected to one or more liquid outlets 5 (not indicated in the drawings).

### Embodiment VIII

The embodiment describes a flow path converter on the basis of Embodiments I to VII, which further has the following technical features. As shown in Fig. 1 to Fig. 22, in the embodiment, the hollow cavity 6 is disposed in the housing 1. The liquid inlet 4 and the liquid outlet 5 formed in the housing 1 both are connected with the cavity 6. The valve core 2 is disc-shaped and is mounted in the cavity 6, and the periphery of the disc-shaped valve core 2 is in contact with an inner circumferential wall of the cavity 6 in a sealed manner, such that the cavity 6 is divided by the valve core 2 into two portions which do not are communicated with each other, and liquid flowing from the liquid inlet 4 can only flow to the liquid outlet 5 through the path 9 disposed on the valve core 2.

As shown in Fig. 1 to Fig. 22, in the embodiment, a driving motor 3 is disposed on the housing 1, and a motor shaft of the driving motor 3 is connected with the center of the valve core 2 with disc-shape to drive the valve core 2 to rotate around the central shaft. Preferably, the motor shaft of the driving motor 3 is coaxial with the cylindrical housing 1.

As shown in Fig. 1 to Fig. 22, the housing 1 of the flow path converter is composed of a first housing 7 and a second housing 8 which are buckled with each other, and at least one bolt 11 at the buckled junction for fixedly connecting the first housing 7 and the second housing 8. The cavity 6 is enclosed by the first housing 7 and second housing 8 buckled with each other. The valve core 2 is mounted in the cavity 6. The first housing 7 is provided with the liquid inlet 4, and the second housing 8 is provided with the liquid outlet 5.

As shown in Fig. 1 to Fig. 22, in the embodiment, connectors 10 that are mounted on the valve core 2 and protrude outwards are respectively disposed on the two ends of the path 9. The connectors 10 are made of an elastically deformable material, for example, rubber. End portions of the connectors 10 are in contact with an inner wall of the cylindrical housing 1 in a sealed manner, such that the connectors 10 is in sealed contact with the inner wall of the hollow cavity 6 of the housing 1. Thereby, the liquid between the valve core 2 and the inner wall of the cavity 6 is prevented from flowing into the path 9, and the path 9 is controlled to be close or open.

In the embodiment, the connectors 10 are in cylindrical shapes extending along the coaxial axis, and hollow portions in the interior of the connectors 10 in cylindrical shape are connected with the path 9. An inner circumferential diameter of each connector 10 in cylindrical shape is less than radial dimensions of the liquid inlet 4 and liquid outlet 5, and an outer circumferential diameter of each connector in cylindrical shape is greater than the radial dimensions of the liquid inlet 4 and liquid outlet 5.

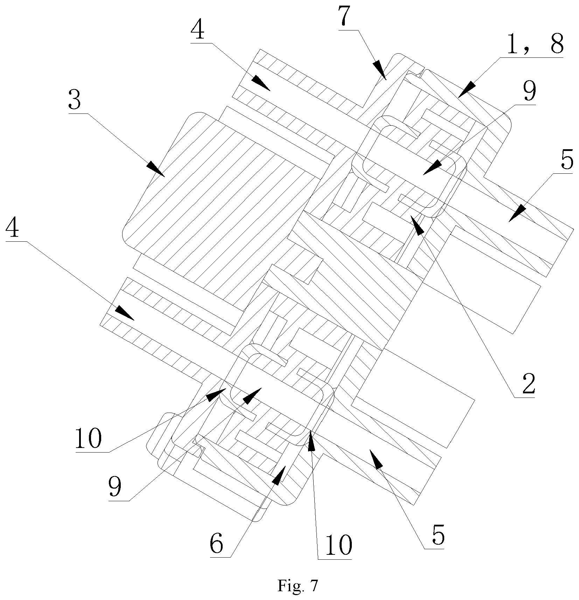

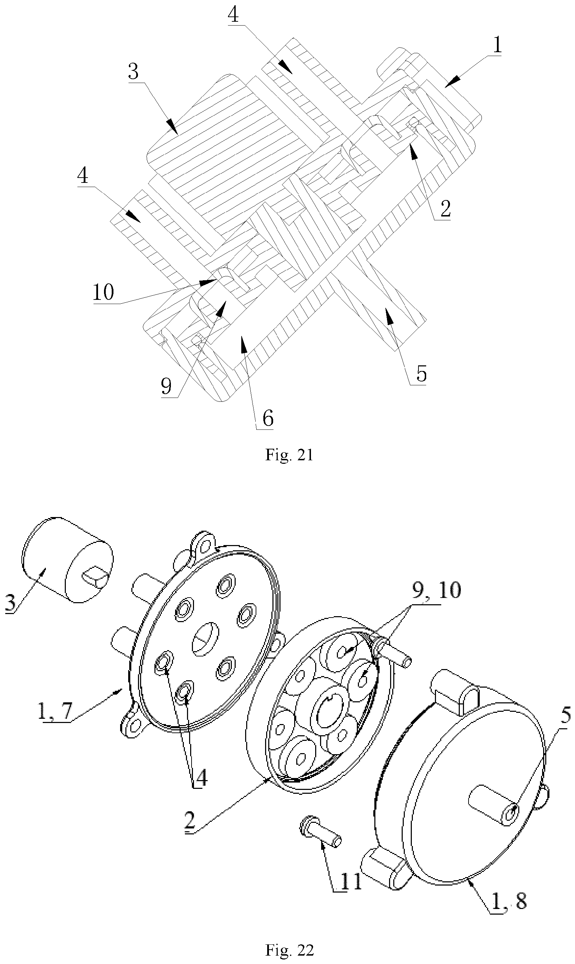

In the flow path converter (as shown in Fig. 7) described in Embodiments I to V, the connectors 10 on the two ends of the path 9 are respectively in sealed contact with the inner walls of the cavities 6 on the first side and second side of the housing 1, so as to control the liquid inlet 4 and the liquid outlet 5 to be connected with and disconnected from the path 9. In the flow path converter (as shown in Fig. 21) described in Embodiment VI, the connector 10 on one end of the path 9 is in sealed contact with the inner wall of the cavity 6 on the first side of the housing 1, such that it is achieved to only control the liquid inlet 4 to be connected with and disconnected from the path 9. Likewise, in the flow path converter described in Embodiment VII, the connector 10 on one end of the path 9 is in sealed contact with the inner wall of the cavity 6 on the second side of the housing 1, such that it is achieved to only control the liquid outlet 5 to be connected with and disconnected from the path 9.

Definitely, in the embodiment, in order to achieve the sealing between the path 9 on the valve core 2 and the liquid inlet 4 and/or the liquid outlet 5 formed on the housing 1, other sealing assemblies may also be disposed on the valve core 2 and/or the housing 1. So the sealing between the path 9 and the water inlet 4 and/or the water outlet 5 is removed during the rotation of the valve core 2.

### Embodiment IX

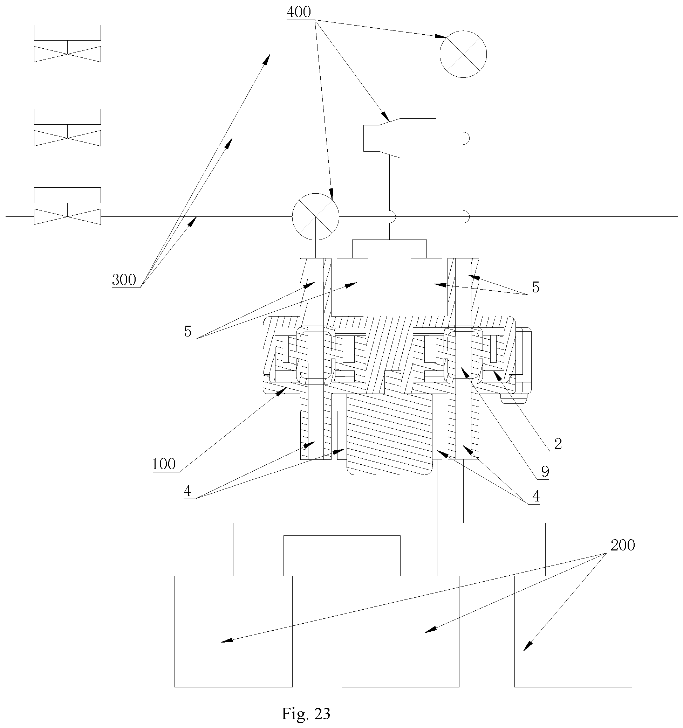

As shown in Fig. 23, the embodiment describes a feeding device. The feeding device includes: a liquid storage box provided with at least one liquid storage cavity 200; a dispenser provided with at least one feeding water path 300; and the flow path converter 100 with the structure described in Embodiment I to Embodiment VIII. Each liquid storage cavity 200 is connected with at least one liquid inlet 4 of the flow path converter 100, and a liquid outlet 5 of the flow path converter 100 is connected with the at least one feeding water path 300.

Definitely, in the embodiment, the arrangement manner of the liquid inlet 4 and the liquid outlet 5 of the flow path converter 100 is not limited to the manner as shown in Fig. 23. In addition, the connection manner of the liquid inlet 4 and the liquid outlet 5 of the flow path converter 100 is not limited to the manner as shown in Fig. 23.

In the embodiment, the feeding water path 300 may use any water path of an existing feeding device. For example, the feeding water path 300 is a water path that is integrated on a housing of the feeding device. In the embodiment, the liquid storage cavities 200 are cavities for storing different categories of additives, which may use any existing structure, such as cartridge-type liquid storage cavities. In addition, each liquid storage cavity 200 may be composed of the cavities on different liquid storage boxes, or may be composed of different independent cavities on one liquid storage box.

As shown in Fig. 23, in the embodiment, in order to suck different categories of additives respectively stored in the liquid storage cavities 200, suction apparatuses 400 may be disposed on the feeding water paths 300 of the dispenser. The additives stored in the liquid storage cavities 200 are sucked into the feeding water paths 300 by a suction force generated by the suction apparatus 400. Each suction apparatus 400 may be any existing apparatus, such as a pump and a Venturi tube, such that the additives in the liquid storage cavities 200 are sucked into the feeding water path 300 and then fed together with inflowing water.

An process of the feeding device used for feeding the additives is as follows.

First, the valve core 2 of the flow path converter 100 rotates to a set position, and at least one liquid inlet 4 and at least one liquid outlet 5 are connected with each other by means of the path 9 on the valve core 2 in the manner of one-to-one correspondence, and/or one corresponding to plurality, and/or plurality corresponding to plurality.

Further, under the action of the suction force generated by each suction apparatus 400, the additive in the liquid storage cavity 200 connected to the selected liquid inlet 4 flows to the flow path converter 100, and then is sucked to the corresponding liquid outlet 5 by the corresponding path 9 of the valve core 2 in the flow path converter 100.

Subsequently, the additive sucked to the corresponding liquid outlet 5 of the flow path converter 100 is delivered into the feeding water path 300 correspondingly connected with the liquid outlet. The additive flows to a water outlet of the feeding water path 300 together with inflowing water flowing in the feeding water path 300, and then is fed into a washing machine.

By means of the apparatus, different categories of additives are respectively fed through different feeding water paths, and switching the connection of a plurality of liquid storage cavities and a plurality of feeding water paths is achieved by using the flow path converter. Thereby the control components of the feeding device are reduced, the cost of the feeding device is greatly saved, and the fault rate of the feeding device is decreased.

Meanwhile, in the embodiment, in order to accurately measure the feeding amount of the additives, any quantitative structure may be disposed on each feeding water path 300, or any method for measuring the feeding amount may be used, such that the feeding amount of the additives can be accurately acquired. For example, as shown in Fig. 23, a flow sensor is disposed on each feeding water path 300, and the liquid outlet 5 of the flow path converter 100 is connected to the feeding water path 300 upstream from each flow sensor, so as to accurately measure the sucked additive flowing out from each feeding water path 300. Alternatively, a quantitative cavity is connected in series on the feeding water path 300 so that the additive from the liquid storage cavity 200 is sucked out as the amount corresponding to the quantitative cavity each time and flows in the feeding water path 300. In this way, it also realizes an effect of accurately measuring the additive sucked by each feeding water path 300 (not indicated in the drawings).

The embodiment further describes a washing machine. The above feeding device is mounted on the washing machine. A water intake structure of the washing machine is connected to a washing cylinder of the washing machine by feeding water paths 300 of the feeding device. In addition, water inlets of the feeding water paths 300 is communicated with the water intake structure of the washing machine, and a control valve for controlling on and off of inflowing water is mounted at the water inlet of the feeding water path 300. Definitely, respectively controlling the opening and closing of the feeding water paths 300 can still be achieved by mounting the flow path converter 100 described in the above embodiments between the water inlets of a plurality of feeding water paths 300 and the water intake structure. Further, water outlets of the feeding water paths 300 are communicated with the washing cylinder of the washing machine. The water outlets of the feeding water paths 300 may be directly communicated with the washing cylinder, or may indirectly be connected to the washing cylinder by means of other water intake components such as a spray thrower, an atomizer.

The washing machine may be any existing laundry processing device such as a drum washing machine, a pulsator washing machine, a multi-cylinder washing machine having a plurality of laundry processing cylinders, or a multifunctional washing device integrated with other functions such as an ironing function, a dish washing function, a laundry drying function and a floc water processing function. The water outlets of the feeding water paths 300 of the feeding device may be connected with different containers such as washing cylinders, cavities and inner containers, thereby the various additives and water are fed in different containers of the washing machine by the corresponding feeding water paths 300 after the additives stored in different liquid storage cavities 200 are sucked to the corresponding feeding water paths 300.

The foregoing are merely preferred embodiments of the present invention and are not a limitation to the present invention in any form. Although the present invention has been disclosed as above according to the preferred embodiments, it is not used to limit the present invention. Any person skilled in the art of this patent may make some changes or modifications on the above embodiments to become equivalent embodiments by using the above suggestive technical content without departing from the scope of the technical solutions of the present invention. Any simple changes, equivalent changes and modifications made to the above embodiments on the basis of the technical substance of the present invention all still fall within the scope of the present invention without departing from the content of the technical solutions of the present invention.

## Claims

1. A flow path converter, comprising: a housing provided with at least one liquid inlet and at least one liquid outlet; wherein, a valve core being rotatable is disposed in the housing and is provided with at least one path, and the path is connected with or disconnected from the at least one liquid inlet and the at least one liquid outlet when the valve core rotates to a set position.

2. The flow path converter according to claim 1, wherein two opposite sides of the housing are respectively provided with a plurality of liquid inlets and a plurality of liquid outlets;
the liquid inlets and the liquid outlets are coaxially disposed in a one-to-one correspondence manner;
each of the liquid inlets and each of the liquid outlets are eccentric with a rotary axis of the valve core; and
the path disposed on the valve core is extended in a direction parallel to the rotary axis of the valve core, and two ends of the path are respectively disposed towards the liquid inlets and the liquid outlets.

3. The flow path converter according to claim 2, wherein, the valve core is provided with the path, projections of two ends of each of the path and projections of each of the liquid inlets and each of the liquid outlets are all in a same circle in a direction of a rotary shaft of the valve core, and the path is correspondingly connected with or disconnected from the liquid inlet and the liquid outlet that are coaxially disposed when the valve core rotates around the shaft;
preferably, the valve core is provided with a plurality of paths, and a distance between liquid intake ends of any two paths is equal to a distance between two liquid inlets corresponding to the two paths;
a distance between liquid output ends of any two paths is equal to a distance between two liquid outlets corresponding to the two paths; and
further preferably, the valve core is provided with the plurality of paths, and the paths are equidistantly and symmetrically arranged relative to the rotary axis of the valve core.

4. The flow path converter according to claim 2, wherein, the liquid inlets are arranged on a plurality of concentric circles on a first side of the housing, and each of the concentric circles separately corresponds to the liquid intake end of at least one path; and
the liquid outlets are arranged on a plurality of concentric circles on a second side of the housing, and each of the concentric circles separately corresponds to the liquid output end of at least one path.

5. The flow path converter according to claim 1, wherein, the first side of the housing is provided with a plurality of liquid inlets, and each of the liquid inlets is eccentric with the rotary shaft of the valve core;
the second side of the housing is provided with one liquid outlet;
a cavity is formed inside the housing; the valve core is located in the cavity and close to the first side provided with the liquid inlets; the one liquid outlet is connected with the cavity; the valve core is provided with at least one path; the liquid output end of the path is connected to the cavity, and the liquid intake end is disposed towards the first side of the housing; and the path makes the liquid inlet arranged correspondingly to the path be connected with or disconnected from the cavity when the valve core rotates around the shaft.

6. The flow path converter according to claim 1, wherein, the first side of the housing is provided with one liquid inlet;
the second side of the housing is provided with a plurality of liquid outlets, and each of the liquid outlets is eccentric with an axis of the housing;
a cavity is formed inside the housing; the valve core is located in the cavity and close to the second side provided with the liquid outlets; the liquid inlet is connected with the cavity; the valve core is provided with at least one path; a liquid intake end of the path is connected with the cavity, and a liquid output end is disposed towards the second side of the housing; and the path makes the liquid outlet arranged correspondingly to the path be connected with or disconnected from the cavity when the valve core rotates around the shaft.

7. The flow path converter according to any of claims 1-6, wherein, the liquid inlet and the liquid outlet are respectively disposed on two opposite sides of the housing with cylindrical shape; the housing with cylindrical shape has a hollow cavity; the valve core is rotatably mounted in the hollow cavity; the rotary shaft of the valve core is coaxial with the housing with cylindrical shape; the two ends of the path on the valve core are respectively disposed towards the two sides, respectively provided with the liquid inlet and the liquid outlet, of the housing; and axes of the liquid inlet and the liquid outlet are parallel to the rotary shaft of the valve core.

8. The flow path converter according to any of claims 1-7, wherein, the housing has a hollow cavity, and both the liquid inlet and the liquid outlet disposed on the housing are connected with the hollow cavity; the valve core is disc-shaped and is mounted in the hollow cavity, and a periphery of the valve core with disc-shaped is in contact with an inner circumferential wall of the hollow cavity in a sealed manner; and
a driving motor is disposed on the housing, and a motor shaft of the driving motor is connected to a center of the valve core with disc-shaped to drive the valve core to rotate around a central shaft.

9. The flow path converter according to any of claims 1-8, wherein, a connector mounted on the valve core and protruding outwards is disposed on at least one end of the path, and is made of an elastically deformable material; and an end portion of the connector is in contact with an inner wall of the housing with cylindrical shape in a sealed manner.

10. A feeding device with the flow path converter according to any of claims 1 to 9, cha comprising: at least one liquid storage cavity and at least one feeding water path; wherein, each of the liquid storage cavities is connected to at least one liquid inlet of the flow path converter, and a liquid outlet of the flow path converter is connected to the at least one feeding water path.

11. A washing machine, being provided with the feeding device of claim 10, wherein a water intake structure of the washing machine is connected to a washing cylinder of the washing machine via a feeding water path of the feeding device.
